# EUROPEAN PATENT SPECIFICATION

(11) **EP 1 011 964 B1**
(45) Date of publication and mention of the grant of the patent: **13.08.2003**
(21) Application number: 97954479.8
(22) Date of filing: 24.12.1997
(51) Int. Cl.: B30B 15/32, B30B 15/00, B29C 33/46, B29C 33/38, C11D 13/18

(54) **DIE AND PROCESS FOR STAMPING PLASTIC MATERIAL**
MATRIZE UND VERFAHREN ZUM STANZEN VON PLASTISCHEN MATERIAL
MATRICE ET PROCEDE D'ESTAMPAGE DE MASSES PLASTIQUES

(30) Priority: 30.12.1996 US 774473; 30.12.1996 US 774472; 30.12.1996 US 774474
(43) Date of publication of application: 28.06.2000
(73) Proprietor: UNILEVER PLC, London EC4P 4BQ (GB); UNILEVER N.V., 3013 AL Rotterdam (NL)
(72) Inventor: BROWN, Arnold, Owings Mills, MD 21117 (US); ASHBAUGH, Dean, Lawrence, Phoenix, MD 21131 (US); BUZZEO, Pasquale, Michael, Westminster, MD 21157 (US); HEINZ, Daniel, John, Joppa, MD 21085 (US); STORY, Edward, Ross, Timonium, MD 21093 (US); GIBLIN, Edward, John, Finksburg, MD 21048 (US); STOCKER, Frederick, Edmund, Birkenhead L42 7JT (GB); EDMONDSON, Brian, South Wirral,Cheshire L64 0TP (GB)
(74) Representative: Elliott, Peter William
(86) International application number: EP9707328
(87) International publication number: WO98029236

(56) References cited:
- WO-A-96/14194
- DE-A- 1 467 708
- DE-A- 1 467 728
- DE-A- 1 779 104
- DE-A- 1 779 300
- US-A- 2 444 282
- US-A- 3 003 190
- US-A- 4 648 829
- US-A- 4 985 186
- PATENT ABSTRACTS OF JAPAN vol. 005, no. 090 (M-073), 12 June 1981 & JP 56 038213 A (KASAI KOGYO CO LTD), 13 April 1981,
- PATENT ABSTRACTS OF JAPAN vol. 010, no. 311 (M-528), 23 October 1986 & JP 61 121915 A (MATSUSHITA ELECTRIC IND CO LTD), 9 June 1986,

## Description

### Field of the Invention

The present invention relates to a process for stamping a plastic material using a die to form a shaped article. In particular, it relates to process for stamping detergent bars deodorant sticks or other such products, and foods such as frozen dessert bars.

By "detergent bar" is meant a tablet, cake or bar in which the level of surface active agent, which comprises soap, synthetic detergent active or a mixture thereof, is at least 20 wt. % based on the bar.

### Background of the Invention

In the manufacture of detergent bars, a preformed composition comprising all components of the bar is typically extruded from a nozzle to form a continuous "rod" which is cut into smaller pieces of predetermined length, commonly referred to as "billets." These "billets" are then fed to a stamper or, alternatively, are given an imprint on one or more surfaces using, for example, a die of the same dimensions as the bar surface. The bar surface is hit with force by, eg., a mallet or a die in the shape of a roller.

Stampers typically have a die formed in two halves each with a surface which contacts the billet during the stamping operation. These surfaces are adapted to close to a preset separation distance, thereby compressing the billet between the die halves to give the bar its final shape and appearance, and then separate. Excess composition is squeezed out from the die halves as they close. This is commonly referred to as "flash." The flash is then separated from the soap bar by transferring the bar through holes in a "deflashing plate."

Conventional die stamping machines include "pin die" shaped machines in which a pair of opposing die members or die halves meet during a compaction step and a "box die" machine in which a pair of opposing die members stamp a bar held within a through-opening in a box frame but do not meet during compaction, the peripheral face of the bar being restrained by the box frame.

The die halves are often each provided with a die or ejector insert. These are normally held closed within the die halve by springs but can be pushed open by compressed air or mechanical means to assist in the release of the bar from the die.

During closing of the die halves a vacuum can be applied to remove air trapped in the die cavity between the detergent bar and die surface and, in the case of rotary dies, this vacuum assists in retaining the bars in place during rotation.

Stamping of detergent bars using a die is carried out to give the bars a reproducible shape, smooth surface and/or to imprint a design such as a logo, trade mark or the like onto at least part of a surface of the bar. However, a problem with the ejectors is that they tend to apply higher pressure to a small area of the bar, which can cause problems for soft soap formulations.

Moreover, as a result of die-blocking, i.e. amounts of residual detergent left on die halves which builds up during continued use of the dies, bars are often formed with visible imperfections on their surfaces or they may not release from the die surface.

Numerous solutions to these problems have been proposed.
One solution involves chilling the die halves during the stamping operation. Chilling uses valuable resources, particularly energy sources.

Another solution is described in EP 276 971 and PCT Application No. 95924225.6 which involves the use of die members each comprising a non-elastomeric and an elastomeric part, the elastomeric part having a module of elasticity within a specified range. One difficulty which has been encountered with elastomeric coatings is that they tend to have short useful lives, on the order of a few days or more.

Roussel, U.S. Patent No. 4,809,945 discloses a mold cavity for use in molding articles such as soap bars.

A porous die called Metapor has been used for vacuum molding applications in which a vacuum is pulled through the pores to form a shape over the die.

Fluid release agents are commonly applied in soap stamping to aid bar release. These fluids are sprayed or applied to the dies or billets prior to stamping. Unfortunately, this often results in excess release agent transferring to the stamping apparatus, to the transfer belts or to other machinery. Such transfer can cause operational difficulties such as conveyor belt slippage and the release fluid can be corrosive to the stamping machine metallic part (eg. Brine). Undesirable products of corrosion can also be transferred to the product. Moreover, release agent can be wasted.

Venting of air during soap bar stamping is typically determined by the stamping rate and controlled via the contour of the soap billet. However, a problem which is sometimes encountered is that air which is imperfectly vented causes surface perturbations in the bar. Moreover, the possibility of venting problems decreases the rate at which good quality bars can be produced. This is especially so when stamping more complex shapes.

It is an object of the present invention to provide an improved process for stamping plastic material which overcomes at least some of the above problems.

### Statement of Invention

The invention relates to a process for stamping a detergent bar according to of claim 1.

Because the die is porous, release fluid may be applied through the die to the substrate stamping surface to decrease adhesion between the plastic material stamped therein and the stamping surface(s). Such a release fluid may take many forms. For example, the release fluid may be pressurised, and in particular may be pressurised gas. In such cases the gas will preferably be air, dried air or nitrogen although these gases are envisaged. Depending on the conditions the pressure of the gas may vary between 0 to 250 psi, preferably between 0 and 100 psi.

Further, the temperature of the gas may be varied to suit the conditions. Typically, the temperature of the gas will be less than 50°C, preferably less than 40°C, more preferably less than 30°C and ideally less than 20°C. Usually, the temperature of the gas will be greater than 5 °C, preferably greater than 10°C and ideally greater than 15°C, however it may be as low as -20°C.

In one example of a device that may be used in the invention, includes means, ideally with the die, for applying the release fluid.

The release fluid applied comprises a liquid, either in a pressurised or non-pressurised form. Typically, preferable release liquids may include brine solutions, ispropyl alcohol, mixed sodium phosphate solutions silicone oil, water or mixtures thereof. Alternatively, the release fluid may comprise a mixture of gas and liquid.

In one embodiment of the invention, the release fluid is applied throughout the stamping process. Alternatively, the fluid may only be applied at specific stages of the process. Thus, in the case of a pressurised gas, the application may take place after compression of the soap between the dies but before separation of the die from the substrate.

The porous dies that may be used with the invention preferably comprise a material selected from metals and their alloys, sintered metals and metallic composites, and non-metallic composites, and non-metallic materials such as ceramics, thermoplastics and thermosetting resins. The size of the pores in the die are variable but are generally with the range 0.1 to 500µm, preferably 5 to 50µm, more preferably 5 to 20µm. When dies made from a coarse sintered material are used, the substrate stamping surface of the die is preferably machined or polished to reduce the surface roughness which in turn results in a smoother surface on the stamped substrate.

In a further embodiment of the invention, the porous die, and in particular the substrate stamping surface(s) of the die that are used in the process, is in contact with atmospheric pressure. The device used in the process preferably includes means for breaking the communication between the substrate during the stamping process.

In a still further example of a device which may be used in the invention, the substrate stamping surface is in communication, via the porous die, with a source of reduced pressure.

Ideally, the process includes the additional step of venting at least one die half during the stamping process.
Preferably the venting step is carried out by bringing the substrate stamping surface into communication, via the porous die, with atmospheric pressure during at least a predetermined stage of the stamping process.

The invention will be more clearly understood from the following description of some embodiments thereof, given by way of example only, with reference to the figures and drawings in which:-
Fig. 1 is a cross section along a transverse axis of one half of a soap stamping die which may be used according to the invention;
Fig. 2 graphs the effect of gas and punch temperature on the critical pressure for zero adhesion of substrate to the stamping surface.
Fig. 3 graphs the effect of gas pressure against the adhesive force between the substrate and the stamping surface; and
Figs. 4 and 5 are cross sections along a transverse axis of one half of a soap stamping die which may be used according to further embodiments of the invention.

### Detailed description of the Invention and a device which may be used in the process of the invention

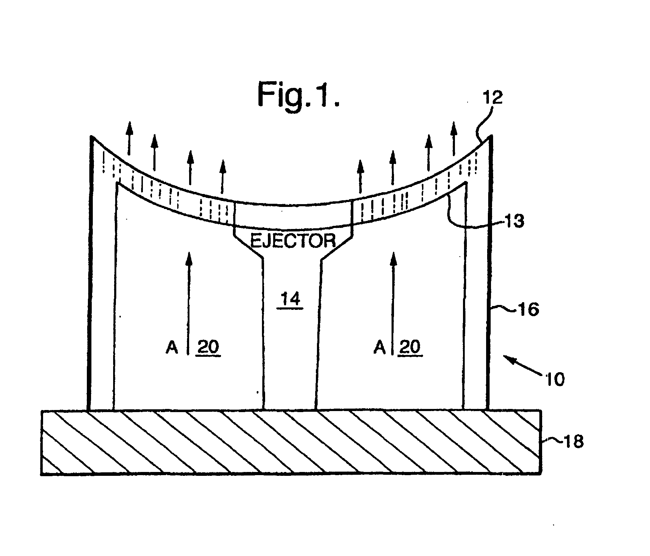

Referring to Fig. 1, die half 10 comprises bar stamping surface 12 and side walls 16. Die 10 is made of a porous material. Side walls 16 are sealed to prevent passage of air therethrough, whereas bar stamping surface 12 and generally parallel inner die wall 13 are not sealed and permit air to pass through. Optional ejector 14 may be provided centrally within the die. Ejectors are well known in the art. Side walls 16 rest on base 18.

An air supply mechanism 20 supplies pressurized air to the die in the direction of arrows marked A. Since walls 16 are sealed and walls 12 and 13 are not, any pressurized air supplied passes through walls 12 and 13 and will exert force against any soap or other product resting on or in proximity to die wall 12.

The operation will be described particularly with respect to soap bars, although it will be understood that other products, particularly soft products like food such as frozen dessert bars may be processed according to the invention. In operation, a soap billet is conveyed to a position intermediate two halves 10 of the die. The halves are conveyed to points proximate, or even in contact with, each other whereby surfaces 12 each contact the soap so that it assumes the desired shape and surface indicia. When it is desired to remove the soap from the die, pressurized air is fed using air supply mechanism 20 to inner wall 13 and ultimately through the pores of the die to die surface 12. At the same time, optionally, ejector 14 is activated by an optional ejector mechanism (not shown). The force of the air supplied pushes the soap and any soap particles away from the surface 12 of the die thereby resulting in a clean release of the soap bar and stray soap particles from the die. The ejector, if used, likewise assists in removing the soap from the die.

Use of the porous die results in distribution of the soap bar release force across the whole surface of the bar. This also can be expected to reduce or eliminate the force concentration of the ejector mechanism and thus to enable very soft soap and high liquid fraction formulations to be released without deformation. It is preferred that the micropores are distributed evenly through a large percentage of the bar contacting surfaces of the die. Preferably the pores constitute at least 15% of the surface area of the bar contacting surface of the die half.

### Example 1

A range of die halves are manufactured from Metapor F100 AL, a microporous, air permeable, aluminum. The die halves are supplied with an air supply providing air pressurized to 90 psi.

The die halves are used to stamp the following soap formulations.

The bar compositions used in the examples are as follows:

| **Formulation A** | **% wt.** |
|---|---|
| Anhydrous tallow soap | 52.3 |
| Anhydrous coconut soap | 29.9 |
| Coconut fatty acid | 5.2 |
| Water and minors | to 100 |

| **Formulation B** | **% wt.** |
|---|---|
| Sodium cocyl isethionate | 27.00 |
| Cocoamidopropyl betaine | 5.00 |
| Polyethylene glycol, M.Wt. | 33.12 |
| Fatty acid | 11.00 |
| Sodium stearate | 5.00 |
| Water + minors | to 100 |

| **Formulation C** | **% wt.** |
|---|---|
| Sodium cocyl isethionate | 49.78 |
| 82/18 Soap | 8.31 |
| Sodium Stearate | 2.98 |
| Alkyl Benzene sulphonate | 2.02 |
| Stearic acid | 20.15 |
| Coco fatty acid | 3.08 |
| Sodium Isethionate | 4.68 |
| Water + minors | to 100 |

After stamping, the die halves are returned to their original positions and pressurized air is applied from within the die so that air passes through the pores and emerges on the soap bar contacting surfaces of the die halves. The causes the soap to release cleanly from the die halves with or without the use of an ejector.

### Example 2

Laboratory measurements were made on the adhesion between sintered bronze discs (ex GKN) and soap formulation D.

The soap was at 40°C and the sinters and gas at 19°C. The sinters were indented into the soap to a depth of 3 mm at a velocity of 1 mm/s and the separated at a velocity of 17 mm/s.

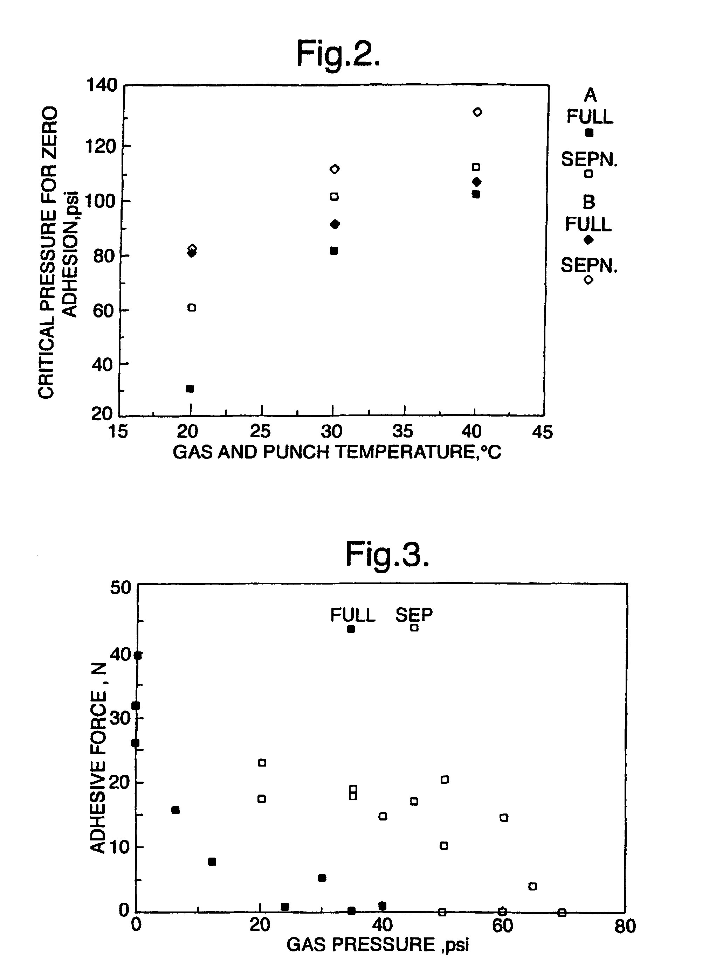

Figure 2 shows the reduction in the adhesion that was obtained as a function of the pressure of nitrogen gas compared with that that results in the absence of gas for the cases were the gas was flowing for the complete indentation/separation cycle and for just the separation part of the cycle only for sinter A. It can be seen that the adhesion force tends to zero as the pressure is increased and it is possible to estimate a value of gas pressure for zero adhesion Po. A higher value of Po was required for separation only flow of gas.

Similar measurements were made for sinters A and B at a range of gas/sinter temperatures. The other test condition being unchanged. Figure 3 shows the gas pressures required to achieve zero adhesion as a function of gas/sinter temperature. It can be seen that there is an interaction between sinter size, gas/sinter temperature, timing of the flow of gas, and gas pressure required to achieve zero adhesion.

| Description of sinters. | | |
|---|---|---|
| SINTER | Approximate particle size of powder used to make the sinter µm. | Approximate pore size µm |
| A | 120 | 15-20 |
| B | 50 | 5-7 |

| **Formulation D** | **% wt.** |
|---|---|
| Sodium Cocyl Isethionate | 27.0 |
| Fatty Acid (Stearic/Palmitic) | 17.0 |
| Sodium Isethionate | 2.2 |
| Coco amido propyl Betaine | 5.0 |
| Sodium Stearate | 6.0 |
| Polyethylene Glycol | 26.6 |
| Maltodextrin | 10.0 |
| Water | 4.5 |
| Minors | to 100 |

### Example 3

The use of a porous die with a liquid release fluid is now described.

Referring to Fig. 3, die half 20 comprises bar stamping surface 22 and side walls 26. Die half 20 is made of a porous material. Side walls 26 are sealed to prevent passage of release fluid therethrough, whereas bar stamping surface 22 and generally parallel inner die wall 23 are not sealed and permit release fluid to pass through. Optional ejector 24 may be provided centrally within the die. Ejectors are well known in the art. Side walls 26st on base 28.

A release fluid supply mechanism supplies fluid to the die in the direction of the arrows marked B. This can be, eg, via low pressure fluid supply system or reservoir head. The required pressure can be selected by one of ordinary skill depending on factors such as fluid viscosity, pore size, stamping rate, and the volume of fluid required for release of each bar. Since walls 26 are sealed and walls 22 and 23 are not, any fluid supplied passes through walls 22 and 23 and will contact any soap or other product resting on or in close proximity to die wall 22.

The operation will be described particularly with respect to soap bars. In operation, a soap billet is conveyed to a position intermediate two halves 20 of the die. The halves are conveyed to points proximate, or even in contact with, each other whereby surfaces 22 each contact the soap so that it assumes the desired shape and surface indicia. Release fluid 29 is present on the stamping surface 22 which it enters through the pores in the die. When it is desired to remove the soap from the die, due to the presence of the release fluid, the soap is cleanly removed from the die halves. The ejector, if used, assists in removing the soap from the die.

The release fluid may be fed through existing cooling channel systems in the case of rotating dies. For reciprocating dies, existing systems of external reservoir may be used.

It can be expected that use of the porous die will result in distribution of the soap bar release fluid across the whole surface of the bar. This may eliminate the need for the ejector mechanism and the force concentration which usually attends its use. Thus, a very soft soap and high liquid fraction formulations can be released without deformation. It is preferred that the micropores are distributed evenly through a large percentage of the bar contacting surfaces of the die. Preferably the pores constitute at least 15% of the surface area of the bar contacting surface of the die half.

Good release of the detergent bars from the die is expected without the expensive chilling of dies, which may otherwise need to be employed. Alternatively, reduced chilling of dies may be used.

"Die half" is understood to comprise one stamping surface of a die, even if a second, similar surface is not utilized.

The sealant used may be an adhesive resin or sealant such as an epoxy or acrylic resin. For example Loctite ShadowCurve7 type AR--an aerosol applied clear acrylic. The coating is spray applied and dries in air. The resin could be liquid applied via brush or even dipped.

### Example 4

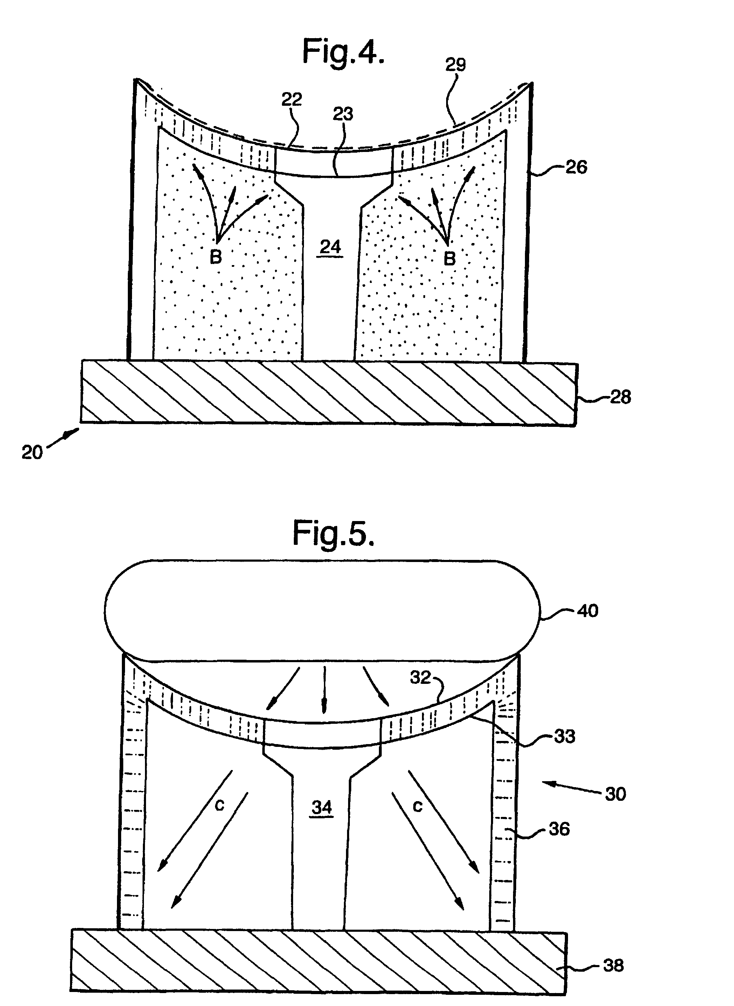

The use of a porous die for venting purposes is descrit. Referring to Fig. 4, die half 30 comprises bar stamping surface 32 and side walls 36. Die 30 is made of a porous material. Side walls 36 are porous so that the pores of stamping surface 32 are in communication with atmospheric pressure via the pores of wall 36. There is therefore no hindrance to the passage of the air from the cavity to the die exterior. There is a continuous passage or pathway for air from the stamping surface of the die through the die to the atmosphere outside.

Neither side wall 36 nor stamping surface 32 or generally parallel inner die wall 33 are sealed whereby to permit air readily to pass through. Optional ejector 34 may be provided centrally within the die. Ejectors are well known in the art. Side walls 36 rest on base 38.

The operation will be described particularly with respect to soap bars. In operation, a soap billet 40 is conveyed to a position intermediate two halves 30 of the die. As can be seen in Fig. 20, positioning of billet 40 on the die half would normally trap air between the billet, on the one hand, and the die stamping surface 32 and ejector 34 on the other. This air is indicated by arrows C in the space between the billet and the die stamping surface and the ejector. However, due to the fact that the die half is porous, the air is not trapped. The air is in communication with atmospheric pressure through the pores in surfaces 32 and 33 and side walls 36. Consequently use of the porous die of the invention relieves the pressure build up which might otherwise occur. As a result, it is expected that the billet does not need to be specially shaped to avoid pressure, nor should it be necessary to slow production speed to improve bar surface quality.

As the process continues, the die halves are conveyed to points proximate, or even in contact with, each other whereby surfaces 32 each contact the soap so that it assumes the desired shape and surface indicia. The dies are then removed and, if desired, soap ejection is assisted by ejector 34.

It is preferred that the micropores are distributed through a large percentage of the bar contacting surfaces of the die.

"Die half" is understood to comprise one stamping surface of a die, even if a second, similar surface is not utilized.

## Claims

1. A process for stamping a detergent bar comprising the steps of:
- (i) feeding a detergent bar composition to a stamping means having at least one porous die half comprising a stamping surface; and
- (ii) stamping the composition using the at least one porous die half to form a stamped detergent bar; and
- (iii) releasing the stamped detergent bar from the stamping means by applying a release fluid through the porous die to the stamping surface.

2. A process as claimed in claim 1 in which the step of applying a release fluid through the porous die is carried out at any stage during the stamping process or throughout the whole process.

3. A process as claimed in claims 1 or 2 wherein the release fluid is pressurised.

4. A process claimed in claim 3 wherein the release fluid is a pressurised gas.

5. A process as claimed in any of claims 1 to 3 wherein the release fluid is a liquid which, upon application through the porous die, coats at least a portion of the substrate stamping surface.

6. A process as claimed in claim 5 in which the liquid is selected from the group consisting of brine, sodium isothionate solution, propylene glycol solution, isopropyl alcohol, silicone oil, water or a mixture thereof.

7. A process as claimed in any of claims 1 to 6 further including the step of venting the at least one die half during the stamping process.

8. A process as claimed in claim 7 in which the venting step is carried out by bringing the substrate stamping surface into communication with atmospheric pressure via the porous die.

9. A process as claimed in claim 8 in which the substrate stamping surface is in communication with atmospheric pressure during part or all of the entire stamping process.

10. A process as claimed in any of claims 1 to 9 in which the substrate stamping surface is in communication with a source of reduced pressure, via the porous die, for at least a portion of the stamping process.

11. A process as claimed in claim 10 wherein the substrate stamping surface is in communication with a source of reduced pressure during a portion of the stamping process, and in communication with a source of pressurised fluid during the same, or an alternative, portion of the stamping process.

## Patentansprüche

1. Verfahren zum Stanzen eines Detergensriegels, umfassend die Schritte:
- (i) Zuführen einer Detergensriegelzusammensetzung zu einer Stanzeinrichtung mit mindestens einer porösen Formwerkzeughälfte, die eine Stanzfläche umfasst; und
- (ii) Stanzen der Zusammensetzung unter Verwendung der mindestens einen porösen Formwerkzeughälfte, um einen gestanzten Detergensriegel zu bilden; und
- (iii) Freigeben des gestanzten Detergensriegels aus der Stanzeinrichtung durch Zuführen eines Trennfluids durch das poröse Formwerkzeug zur Stanzfläche.

2. Verfahren nach Anspruch 1, bei dem der Schritt des Zuführens eines Trennfluids durch das poröse Formwerkzeug in einem beliebigen Stadium während des Stanzverfahrens oder während des gesamten Verfahrens ausgeführt wird.

3. Verfahren nach den Ansprüchen 1 oder 2, bei dem das Trennfluid mit Druck beaufschlagt wird.

4. Verfahren nach Anspruch 3, bei dem das Trennfluid ein Druckgas ist.

5. Verfahren nach einem der Ansprüche 1 bis 3, bei dem das Trennfluid eine Flüssigkeit ist, die nach der Zufuhr durch das poröse Formwerkzeug mindestens einen Teil der Substratstanzfläche überzieht.

6. Verfahren nach Anspruch 5, bei dem die Flüssigkeit aus der Gruppe ausgewählt wird, die aus Sole, Natriumisethionatlösung, Propylenglykollösung, Isopropylalkohol, Silikonöl, Wasser oder einer Mischung davon besteht.

7. Verfahren nach einem der Ansprüche 1 bis 6, weiter umfassend den Schritt eines Entlüftens der mindestens einen Formwerkzeughälfte während des Stanzverfahrens.

8. Verfahren nach Anspruch 7, bei dem der Entlüftungsschritt ausgeführt wird, indem man die Substratstanzfläche über das poröse Formwerkzeug mit Atmosphärendruck in Verbindung bringt.

9. Verfahren nach Anspruch 8, bei dem die Substratstanzfläche während eines Teils oder des ganzen Stanzverfahrens mit Atmosphärendruck in Verbindung steht.

10. Verfahren nach einem der Ansprüche 1 bis 9, bei dem die Substratstanzfläche während mindestens eines Teils des Stanzverfahrens über das poröse Formwerkzeug mit einer Unterdruckquelle in Verbindung steht.

11. Verfahren nach Anspruch 10, bei dem die Substratstanzfläche während eines Teils des Stanzverfahrens in Verbindung mit einer Unterdruckquelle steht, und während desselben oder eines alternativen Teils des Stanzverfahrens in Verbindung mit einer Druckfluidquelle.

## Revendications

1. Procédé pour l'estampage d'une barre de détergent comprenant les étapes consistant à :
(i) alimenter une composition de barre de détergent en direction de moyens d'estampage ayant au moins une moitié de matrice poreuse comprenant une surface d'estampage ; et
(ii) estamper la composition en utilisant la au moins une moitié de matrice poreuse pour former une barre de détergent estampée ; et
(iii) libérer la barre de détergent estampée des moyens d'estampage en appliquant un fluide de libération à travers la matrice poreuse sur la surface d'estampage.

2. Procédé selon la revendication 1, dans lequel l'étape consistant à appliquer un fluide de libération à travers la matrice poreuse est effectuée à n'importe quelle phase durant le processus d'estampage ou pendant tout le processus.

3. Procédé selon la revendication 1 ou la revendication 2, dans lequel le fluide de libération est pressurisé.

4. Procédé selon la revendication 3, dans lequel le fluide de libération est un gaz pressurisé.

5. Procédé selon l'une quelconque des revendications 1 à 3, dans lequel le fluide de libération est un liquide qui, lorsqu'il est appliqué à travers la matrice poreuse, revêt au moins une partie de la surface d'estampage du substrat.

6. Procédé selon la revendication 5, dans lequel le liquide est sélectionné dans le groupe comprenant la saumure, une solution d'isothionate de sodium, une solution de propylène glycol, un alcool isopropylique, une huile de silicone, de l'eau ou un mélange de ceux-ci.

7. Procédé selon l'une quelconque des revendications 1 à 6, comprenant en outre l'étape consistant à ventiler la au moins une moitié de matrice durant le processus d'estampage.

8. Procédé selon la revendication 7, dans lequel l'étape de ventilation est effectuée en amenant la surface d'estampage du substrat en communication avec la pression atmosphérique par l'intermédiaire de la matrice poreuse.

9. Procédé selon la revendication 8, dans lequel la surface d'estampage du substrat est en communication avec la pression atmosphérique durant une partie ou la totalité du processus d'estampage entier.

10. Procédé selon l'une quelconque des revendications 1 à 9, dans lequel la surface d'estampage du substrat est en communication avec une source de pression réduite, via la matrice poreuse, pendant au moins une partie du processus d'estampage.

11. Procédé selon la revendication 10, dans lequel la surface d'estampage du substrat est en communication avec une source de pression réduite durant une partie du processus d'estampage, et en communication avec une source de fluide pressurisé durant cette même partie, ou durant une partie différente du processus d'estampage.
